# EUROPÄISCHE PATENTANMELDUNG

(11) **EP 0 791 392 A1**
(43) Veröffentlichungstag der Anmeldung: **27.08.1997**
(21) Anmeldenummer: 97101590.4
(22) Anmeldetag: 01.02.1997
(51) Int. Cl.: B01F 15/06, A47J 45/02, A47J 47/20

(54) **Für eine Küche vorgesehene Einrichtung mit einer Kaffeemaschine**

(30) Priorität: 23.02.1996 DE 19606735
(71) Anmelder: Blanco GmbH & Co. KG, D-75038 Oberderdingen (DE)
(72) Erfinder: Straub, Frank, 75438 Knittlingen (DE); Jung, Karl-Heinz, 72525 Münsingen-Dottingen (DE)
(74) Vertreter: Hoeger, Stellrecht & Partner

(57) **Zusammenfassung**

Für eine Küche vorgesehene Einrichtung (14,24,26,28,30) mit einer an einer Wand montierbaren Halterung (48,50,56,55) für eine Kaffeemaschine, wobei zur Vereinfachung des Vorgangs der Zubereitung von Kaffee bzw. Espresso eine einen Naßbereich (16,18,20) aufweisende und vor der Wand (10) anbringbare Spüle (14) vorgesehen und die Kaffeemaschine um eine vertikale Achse (36) schwenkbar mit der Halterung verbunden ist derart, daß sich die Kaffeemaschine in einer Gebrauchsstellung über dem Naßbereich der Spüle befindet.

## Beschreibung

Die Erfindung betrifft eine für eine Küche vorgesehene Einrichtung mit einer Halterung für eine Kaffeemaschine, wobei die Halterung einen an einer vertikalen Wand, insbesondere einer Gebäudewand, montierbaren Befestigungsteil aufweist und derart ausgebildet ist, daß die Kaffeemaschine zwischen einer Nichtgebrauchsstellung und einer Gebrauchsstellung, in der ihr Abstand von der Wand größer als in ihrer Nichtgebrauchsstellung ist, bewegt werden kann.

Eine derartige Halterung ist aus dem DE-U-89 04 444.4 bekannt. Diese Halterung besitzt ein plattenartiges Befestigungsteil, mit dem sie z.B. an einer Gebäudewand befestigt werden kann, sowie eine Tragplatte, auf der sich eine handelsübliche Kaffeemaschine mit einem Heißwasserbereiter und einem ein Kaffeefilter tragenden Topf zum Auffangen des Kaffees aufstellen läßt. Das plattenartige Befestigungsteil und die Tragplatte sind über einen längenveränderlichen Tragarm miteinander verbunden, der die Gestalt einer Nürnberger Schere, eines Teleskops oder dergleichen hat.

Wenn vorstehend und im folgenden von einer Kaffeemaschine die Rede ist, so soll hierunter auch eine Espressomaschine verstanden werden.

Die Handhabung handelsüblicher Kaffeemaschinen führt zu einer ganzen Reihe von Problemen: Das Befüllen mit Wasser und Kaffeepulver sowie die Entnahme des verbrauchten Kaffeepulvers haben in der Regel eine Verschmutzung des Umfeldes der Kaffeemaschine zur Folge, und bei den meisten Kaffeemaschinen muß deren Wasser-Vorratsbehälter immer wieder entleert und mit frischem Wasser befüllt werden, um zu vermeiden, daß bei einer vorhergehenden Benutzung nicht aufgebrauchtes Wasser brackig wird.

Da Kaffeemaschinen in aller Regel in der Küche benutzt werden, lassen sich diese Nachteile erfindungsgemäß durch eine Einrichtung der eingangs erwähnten Art vermeiden, welche eine einen Naßbereich aufweisende und vor der genannten Wand anbringbare Spüle umfaßt und bei der die Kaffeemaschine um eine vertikale Achse schwenkbar mit dem Befestigungsteil verbunden ist sowie Befestigungsteil und Kaffeemaschine derart ausgebildet sind, daß sich die Kaffeemaschine in ihrer Gebrauchsstellung über dem Naßbereich der Spüle befindet. Dabei ist unter dem Naßbereich einer Spüle derjenige Spülenbereich zu verstehen, welcher ein oder mehrere Spülbecken, gegebenenfalls ein Spülbecken und ein sogenanntes Restebecken, sowie gegebenenfalls eine Abtropf- und/oder Arbeitsfläche umfaßt.

Bei einer erfindungsgemäßen Einrichtung ist es nur erforderlich, die Kaffeemaschine in ihrer Gebrauchsstellung zu befüllen und verbrauchtes Kaffeepulver sowie gegebenenfalls ein gebrauchtes Filter in der Gebrauchsstellung der Kaffeemaschine letzterer zu entnehmen, denn dann fallen verschüttetes Kaffeepulver und andere Verunreinigungen auf den Naßbereich der Spüle, von dem sie sich problemlos entfernen lassen. Andererseits behindert die Kaffeemaschine, wenn sie sich in ihrer Nichtgebrauchsstellung befindet, das Arbeiten auf und in der Spüle nicht.

Da eine Spüle stets in unmittelbarer Nähe einer bauseitigen Wasserleitung angeordnet ist, läßt sich mit einer erfindungsgemäßen Einrichtung auch das Problem des Befüllens der Kaffeemaschine mit Frischwasser leicht lösen; zu diesem Zweck zeichnen sich bevorzugte Ausführungsformen der erfindungsgemäßen Einrichtung durch eine zur Kaffeemaschine führende Frischwasserzufuhrleitung zum Anschließen an eine die Spüle versorgende Wasserleitung aus, wobei sich in der bauseitigen Wasserleitung oder in der Frischwasserzufuhrleitung der erfindungsgemäßen Einrichtung ein Ventil befinden kann, welches zum Befüllen der Kaffeemaschine manuell geöffnet und geschlossen wird; die Einrichtung kann aber auch so ausgebildet sein, daß dieses Ventil automatisch geöffnet wird, wenn der Benutzer die Kaffeemaschine einschaltet, und daS die letztere mit einer Überfüllsicherung versehen ist, durch welche das Ventil auch wieder automatisch geschlossen wird.

Da sich Verschmutzungen aus einem Becken einer Spüle besonders leicht entfernen lassen, werden Ausführungsformen bevorzugt, bei denen die Halterung und die Kaffeemaschine derart ausgebildet sind, daß sich die Kaffeemaschine in ihrer Gebrauchsstellung über einem Becken der Spüle befindet, was natürlich voraussetzt, daß die Halterung in einer entsprechenden Position relativ zur Spüle montiert wird.

Da die Kaffeemaschine einer erfindungsgemäßen Einrichtung in aller Regel ein Filter enthalten wird - vor allem bei einer Espressomaschine empfiehlt sich die Anordnung eines Filterteils am underen Ende der Kaffeemaschine, wobei das Filterteil, wie bei Espressomaschinen üblich, am Hauptteil der Kaffeemaschine durch Verdrehen angebracht und von diesem gelöst wird -, empfehlen sich Ausführungsformen, bei denen die Halterung eine Arretiervorrichtung zum Arretieren der Kaffeemaschine in ihrer Gebrauchsstellung aufweist, welche derart ausgebildet ist, daß beim Anbringen und Lösen eines um eine vertikale Achse drehbaren Filterteils der Kaffeemaschine die letztere in ihrer Gebrauchsstellung verbleibt. Die Arretiervorrichtung kann dabei nach Art einer Federrast ausgebildet sein, deren Kaltekraft groß genug ist, um beim Anbringen und Lösen des Filterteils ein Verschwenken der Kaffeemaschine zu verhindern; es kann sich aber auch um eine nach Art einer Verriegelungsvorrichtung ausgebildete Arretiervorrichtung handeln, welche insbesondere manuell verriegelt und gelöst wird.

Besonders kompakt baut die erfindungsgemäße Einrichtung dann, wenn das Befestigungsteil ungefähr U-förmig mit einem an der Wand befestigbaren vertikalen Schenkel sowie zwei horizontalen Schenkeln ausgebildet ist, wobei die beiden horizontalen Schenkel mit den Anlenkstellen für die Kaffeemaschine versehen sind. Eine solche Einrichtung ist außerdem besonders stabil, da die Kaffeemaschine sowohl oben, als auch unten gehalten wird.

Grundsätzlich könnte man beim Bereiten von Kaffee bzw. Espresso die zu befüllenden Trinkgefäße unter die Kaffeemaschine halten, so wie dies bei einer Reihe von Kaffee- bzw. Espressoautomaten der Fall ist. Um dem Benutzer die Getränkebereitung jedoch zu erleichtern, wird empfohlen, die Halterung unterhalb der Kaffeemaschine mit einem Träger zum Aufsetzen wenigstens einer Kaffeetasse, eines Bechers oder dergleichen zu versehen. Der Träger könnte z.B. die Gestalt eines Halterings haben, bevorzugt werden jedoch Ausführungsformen, bei denen der Träger plattenförmig ausgebildet ist.

Damit auch dieser Träger das Arbeiten auf bzw. in der Spüle nicht behindern kann, ist bei bevorzugten Ausführungsformen der erfindungsgemäßen Einrichtung der Träger um eine vertikale Achse verschwenkbar. Noch weniger behindert der Träger die Spülenbenutzung dann, wenn er auch noch um eine horizontale Achse schwenkbar und in einer horizontalen Gebrauchsstellung festlegbar ist, denn dann kann der Träger in einer Nichtgebrauchsstellung parallel zur Wand verlaufen.

Weitere Merkmale, Vorteile und Einzelheiten der Erfindung ergeben sich aus den beigefügten Ansprüchen und/oder aus der nachfolgenden Beschreibung sowie der beigefügten zeichnerischen Darstellung einer besonders vorteilhaften Ausführungsform der erfindungsgemäßen Einrichtung; in der Zeichnung zeigen:
- Fig. 1:: einen Teil einer Küche mit der erfindungsgemäßen Kombination aus Espressomaschine und Spüle in montiertem Zustand, und zwar in einer perspektivischen Darstellung, wobei sich die Espressomaschine in ihrer Gebrauchsstellung befindet;
- Fig. 2:: eine Frontansicht der sich in ihrer Gebrauchsstellung befindlichen Espressomaschine;
- Fig. 3:: eine Seitenansicht der sich in ihrer Gebrauchsstellung befindlichen Espressomaschine;
- Fig. 4:: eine Frontansicht der Halterung für die Espressomaschine, jedoch ohne die letztere;
- Fig. 5:: eine Ansicht der in Fig. 4 gezeigten Halterung von oben;
- Fig. 6:: einen Schnitt durch die Halterung gemäß der Linie 6-6 in Fig. 5;
- Fig. 7:: eine Ansicht der in Fig. 2 gezeigten Teile von oben, wobei die Espressomaschine gestrichelt auch in ihrer Nichtgebrauchsstellung dargestellt wurde, und
- Fig. 8:: eine Vorderansicht der in Fig. 1 zwischen Spüle und der eigentlichen Espressomaschine dargestellten Teile, nachdem der dort gezeigte Tassenträger zusammengeklappt und in seine Nichtgebrauchsstellung geschwenkt wurde.

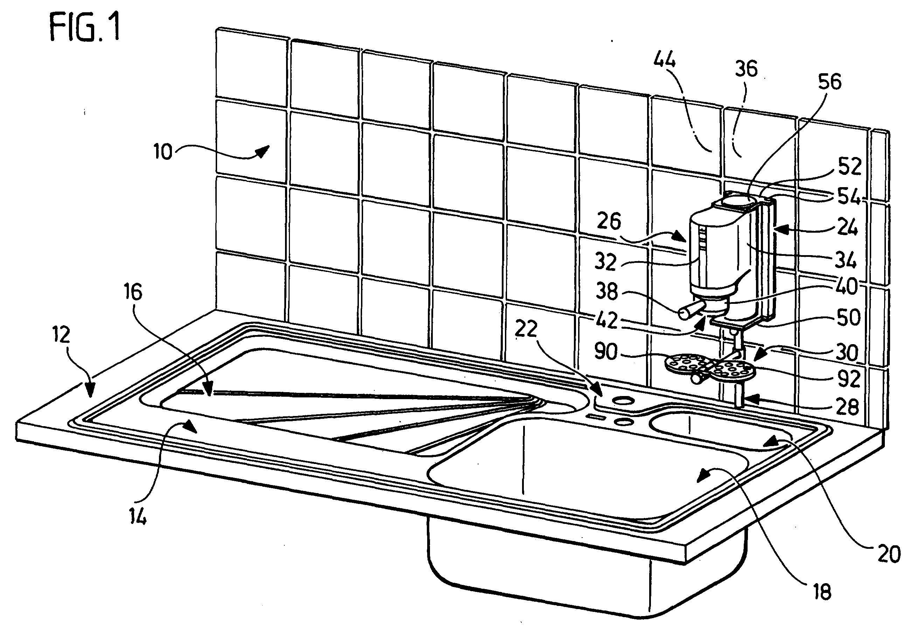

Die Fig. 1 zeigt einen Teil einer Küchenwand 10, vor der sich ein sogenannter Unterbauschrank befinden soll, welcher nicht dargestellt wurde und auf dem eine in Fig. 1 gezeigte Abdeckplatte 12 ruht, die hinten gegen die Wand 10 anliegt. Wie üblich besitzt diese Abdeckplatte 12 einen Ausschnitt, in den eine Einbauspüle 14 eingesetzt und dort befestigt ist.

Die Einbauspüle 14 besitzt eine Abtropffläche 16, ein großes Spülbecken 18, ein kleineres und üblicherweise als Restebecken bezeichnetes Becken 20 sowie zwischen diesem und der Abtropffläche 16 an der hinteren Seite der Einbauspüle 14 eine sogenannte Batteriebank 22, auf der eine in Fig. 1 nicht dargestellte Mischbatterie zu montieren ist, um bei Arbeiten auf und in der Einbauspüle kaltes, heißes und aus beidem gemischtes Wasser zur Verfügung zu haben. Wie sich aus dem folgenden noch ergeben wird, ist es für die erfindungsgemäße Einrichtung von Vorteil, wenn das Restebecken 20 nahe dem hinteren Rand der Spüle angeordnet ist. Bei der dargestellten Einbauspüle handelt es sich bei der Abtropffläche 16 um einen vertieften Bereich, der die Gestalt einer flachen Wanne hat und über einen nicht dargestellten Ablauf verfügt, welcher sinnvollerweise neben der Batteriebank 22 liegt.

Bei der dargestellten Einbauspüle 14 sind das Restebecken 20, die Abtropffläche 16 und das Spülbecken 18 dem sogenannten Naßbereich der Spüle zuzuordnen, d.h. denjenigen Zonen der Spüle, auf denen bzw. in denen üblicherweise diejenigen Arbeiten durchgeführt werden, für die Wasser benötigt wird oder bei denen Wasser, z.B. Tropfwasser, anfällt.

An der Küchenwand 10 ist eine insgesamt ungefähr U-förmige Halterung 24 befestigt, an der eine Espressomaschine 26 um eine vertikale Achse schwenkbar angebracht ist. Von der Halterung 24 verläuft auf der Wand 10 ein Rohr 28 nach unten; es dient dem Anschluß der Espressomaschine 26 an unter der Abdeckplatte 12 bzw. der Einbauspüle 14 befindliche Wasser- und Elektroleitungen, d.h. innerhalb des Rohres 28 verlaufen z.B. ein Wasserschlauch und ein Elektrokabel zur Verbindung der Espressomaschine 26 mit den erwähnten und unter der Einbauspüle 14 vorhandenen Leitungen. Deshalb ist das Rohr 28 durch eine Öffnung in der Abdeckplatte 12 nach unten hindurchgeführt, bei einer entsprechend gestalteten Spüle könnte sich diese Öffnung aber auch in der Spüle befinden.An dem Rohr 28 ist schließlich ein Tassenträger 30 angebracht, auf dem sich Tassen oder andere Trinkgefäße abstellen lassen, welche mit der Espressomaschine 26 befüllt werden sollen.

Wie bereits erwähnt, zeigt die Figur 1 die Espressomaschine 26 in ihrer Gebrauchsstellung, und die Figur 1 läßt erkennen, daß sich die Espressomaschine dabei erfindungsgemäß über dem Restebecken 20 befindet - dieses hat in bekannter Weise ebenso wie das Spülbecken 18 im Beckenboden eine nicht dargestellte Ablauföffnung, welche mit einer Abwasserleitung verbunden ist. Von der Espressomaschine 26 herabfallendes frisches oder benutztes Kaffeepulver, herabtropfendes Wasser oder herabtropfender Kaffee gelangen also unmittelbar in das Restebecken 20 und verschmutzen infolgedessen nicht andere Kücheneinrichtungsteile. Obwohl es diesbezüglich besonders vorteilhaft ist, wenn die Spüle so gestaltet und die Espressomaschine bzw. Kaffeemaschine relativ zur Spüle so montiert ist, daß sich die Espressomaschine in ihrer Gebrauchsstellung über dem Restebecken der Spüle befindet, wird der vorstehend beschriebene Vorteil nur wenig geschmälert, wenn sich die Espressomaschine in ihrer Gebrauchsstellung über dem Spülbecken oder über der Abtropffläche der Spüle befinden würde, da sich auch von diesen Zonen des Naßbereichs der Spüle Verschmutzungen leicht entfernen lassen.

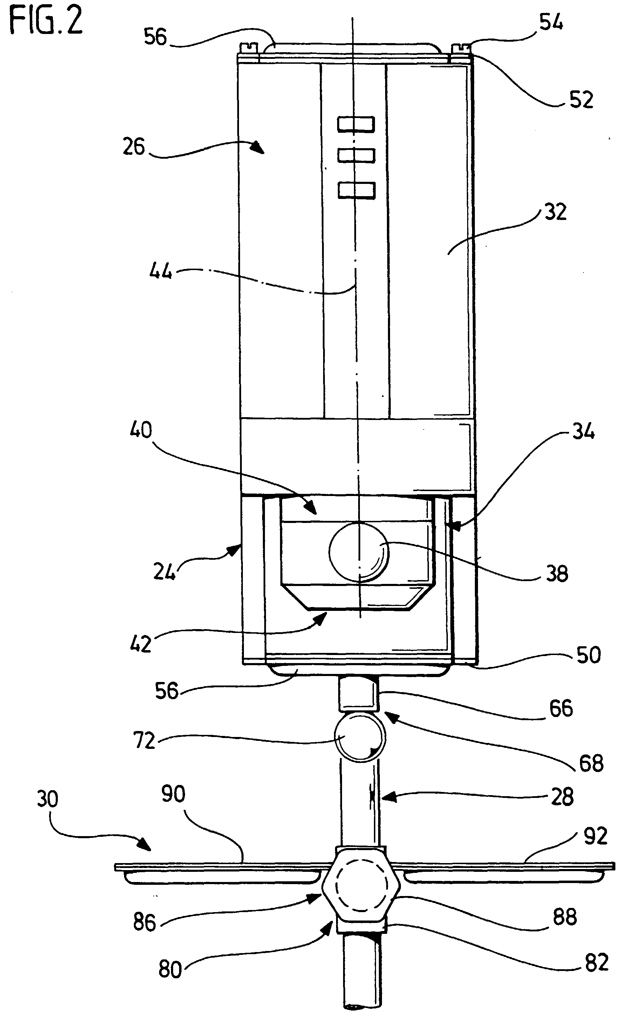

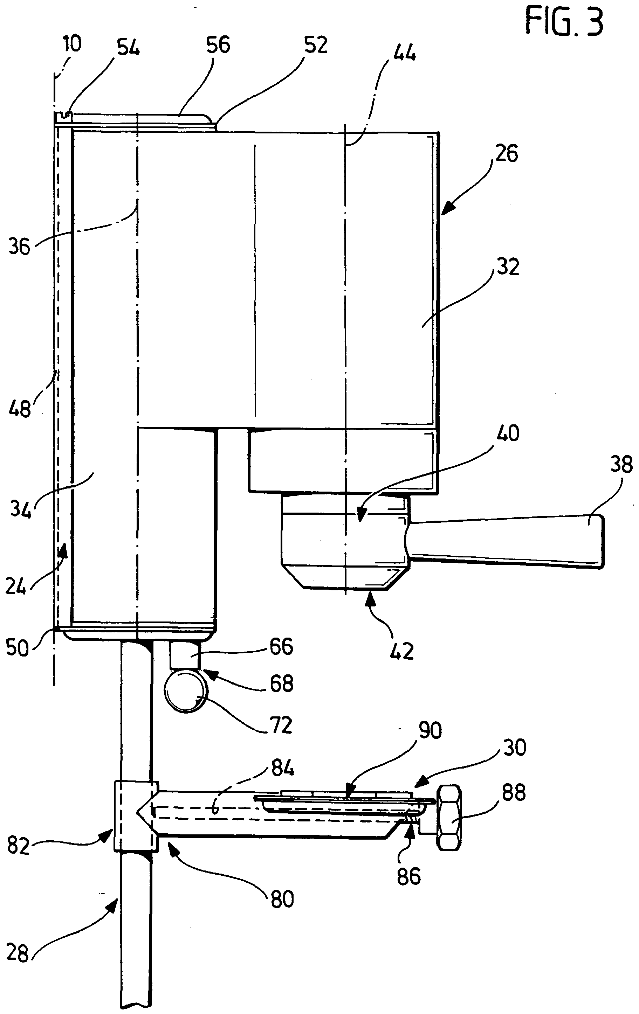

Wie zunächst die Figuren 2 und 3 erkennen lassen, besitzt die Espressomaschine 26 einen Maschinenkörper 32 und einen Lagerkörper 34; mit letzterem ist die Espressomaschine 26 an der Halterung 24 um eine vertikale Schwenkachse 36 schwenkbar gelagert, und in der Gebrauchsstellung der Espressomaschine liegt der mit dem Lagerkörper 34 fest verbundene Maschinenkörper 32 vor der Halterung 24 und dem Lagerkörper 34. Unten am Maschinenkörper 32 besitzt die Espressomaschine ein mit einem Handgriff 38 versehenes Filtergehäuse 40, welches unten einen Auslauf 42 für das hergestellte Getränk aufweist und durch Drehen mittels Schwenken des Handgriffs 38 um eine vertikale Schwenkachse 44 in üblicher Weise am Maschinenkörper 32 befestigt bzw. von diesem gelöst werden kann, um neues Kaffeepulver in die Maschine einzubringen bzw. aus dieser verbrauchtes Kaffeepulver zu entfernen.

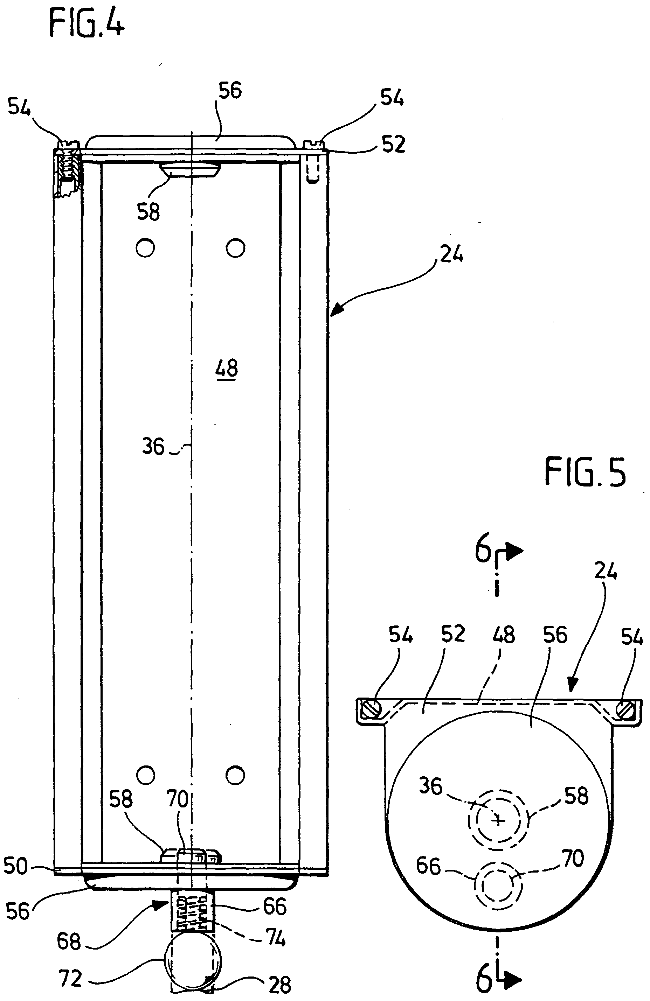

Wie die Figuren 4 bis 6 erkennen lassen, umfaßt die Halterung 24 eine an der Wand 10 z.B. mittels Schrauben anzubringende Befestigungsplatte 48, an der eine untere Lagerplatte 50 z.B. durch Schweißen dauerhaft befestigt ist, während eine obere Lagerplatte 52 an der Befestigungsplatte 48 mittels Schrauben 54 lösbar angebracht ist. An jeder der beiden Lagerplatten ist eine Scheibe 56 mit einem Zentrierzapfen 58 fest angebracht (letzterer durchgreift eine mittlere Öffnung der zugehörigen Lagerplatte), z.B. durch Kleben, und die beiden Zentrierzapfen 58 sind mit der Schwenkachse 36 koaxial. Der Lagerkörper 34 hat oben und unten jeweils eine Aussparung, in die jeweils einer der beiden Zentrierzapfen 58 passend eingreifen kann, so daß sich der Lagerkörper 34 und damit die Espressomaschine 26 dadurch an der Halterung 24 schwenkbar anbringen läßt, daß der Lagerkörper 34 zunächst auf den unteren Zentrierzapfen 58 aufgesetzt und dann die obere Lagerplatte 52 so an der Befestigungsplatte 48 befestigt wird, daß der obere Zentrierzapfen 58 in die obere Aussparung des Lagerkörpers eingreift.

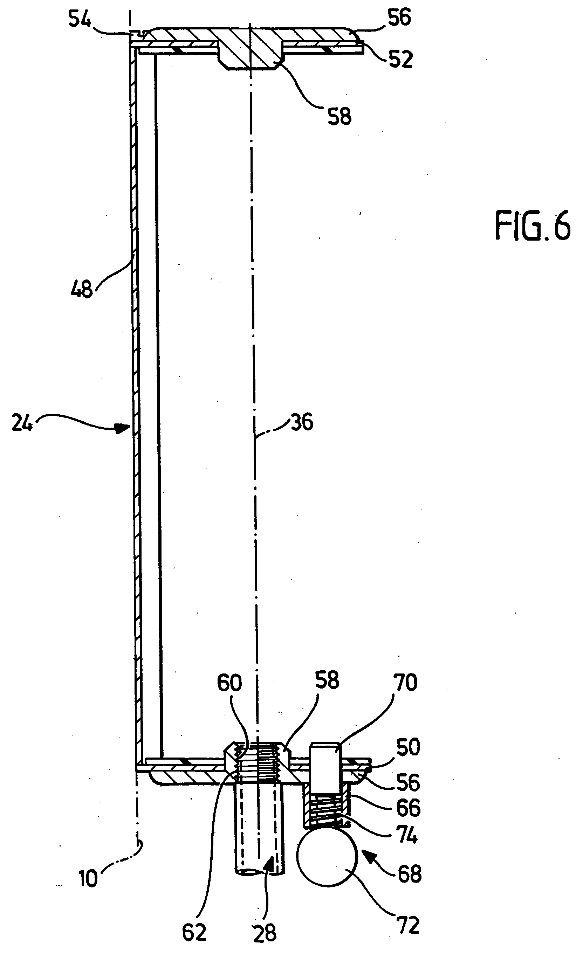

Wie die Fig. 6 zeigt, hat die untere Scheibe 56 zentrisch mit ihrem Zentrierzapfen 58 eine Gewindebohrung 60, welche infolgedessen koaxial mit der Schwenkachse 36 ist; in die Gewindebohrung 60 läßt sich das Rohr 28 mit einem Außengewinde 62 einschrauben und so mit der Halterung 24 verbinden.

Gemäß den Figuren 1 und 2 vor der Gewindebohrung 60 ist an der unteren Scheibe 56 eine Führungsbüchse 66 befestigt, die der Halterung und Führung eines Arretierelements 68 dient.

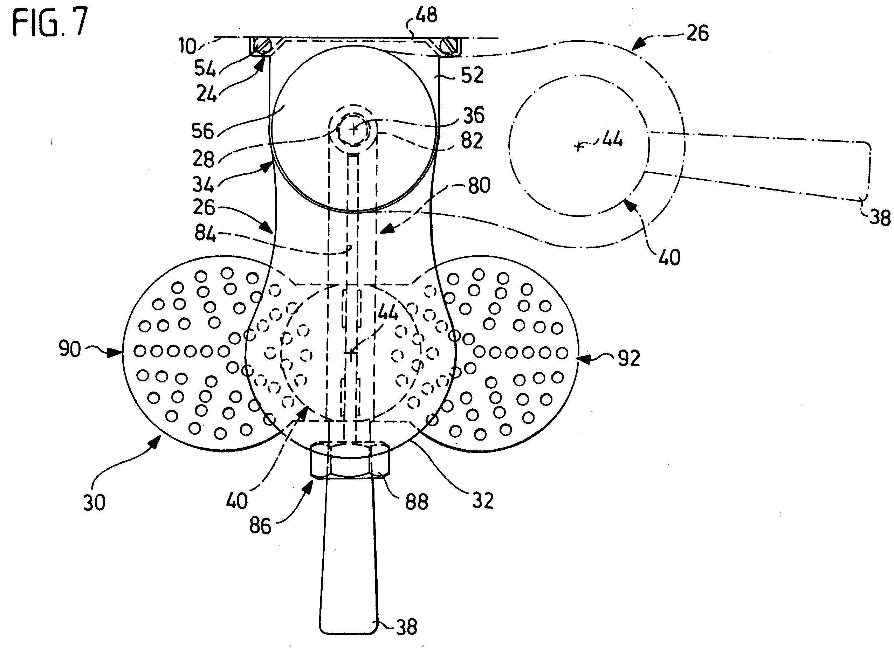

Dieses hat einen Arretierzapfen 70 und einen Griff 72 und wird durch eine Druckfeder 74 in der in den Zeichnungen dargestellten Position gehalten. In dieser Position greift der Arretierzapfen 70 in eine entsprechende Aussparung des Lagerkörpers 34 ein, wenn die Espressomaschine 26 ihre in den Figuren 1 und 2 dargestellte Gebrauchsstellung einnimmt. Wird das Arretierelement 68 mit Hilfe seines Griffs 72 entgegen der Wirkung der Druckfeder 74 nach unten gezogen, so wird dadurch die Espressomaschine 26 entriegelt und läßt sich um die Schwenkachse 36 in ihre in Figur 7 dargestellte Nichtgebrauchsstellung schwenken, in der sie sich unmittelbar vor der Küchenwand 10 befindet.

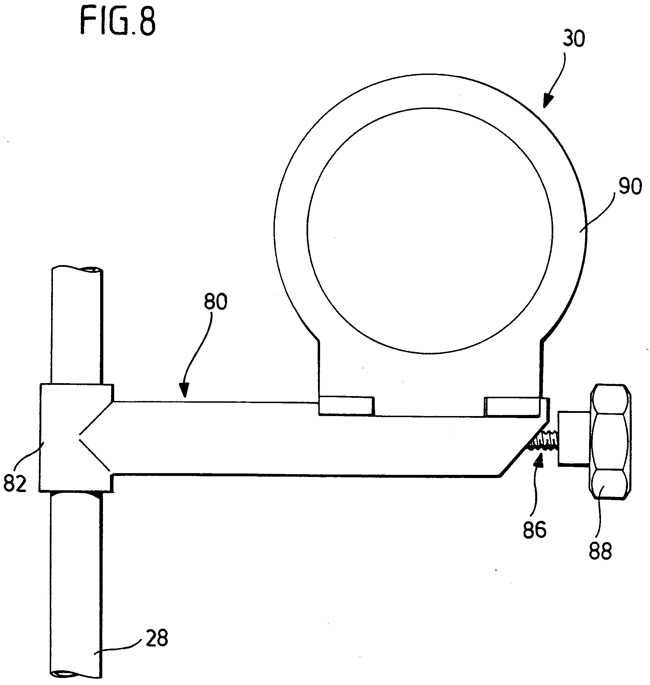

Unterhalb der Halterung 24 befindet sich ein den Tassenträger 30 haltender Ausleger 80, der an einer auf das Rohr 28 aufgeschobenen Buchse 82 fest angebracht ist und eine mit einem Innegewinde versehene Längsbohrung 84 für eine Feststellschraube 86 aufweist, für die die Buchse 82 eine Durchtrittsöffnung hat, so daß sich die Feststellschraube 86 mittels eines Griffs 88 gegen den Außenumfang des Rohrs 28 festziehen und so der Ausleger 80 am Rohr 28 festlegen läßt. Diese Konstruktion ermöglicht es, auch den Tassenträger 30 aus seiner in Figur 1 dargestellten Gebrauchsstellung heraus um die Schwenkachse 36 in eine Nichtgebrauchsstellung zu schwenken, in der der Ausleger 80 zumindest ungefähr parallel zur Küchenwand 10 verläuft und unmittelbar vor dieser liegt. Damit Ausleger 80 und Tassenträger 30 in diese Nichtgebrauchsstellung geschwenkt und dort mit Hilfe der Feststellschraube 86 festgelegt werden können, wird der Tassenträger 30 von zwei Tassenträgerelementen 90 und 92 gebildet, die am Ausleger 80 um dessen Längsachse schwenkbar angebracht sind, sich, wie dies die Figur 8 erkennen läßt, nach oben gegeneinander klappen lassen und in ihrer z.B. in den Figuren 1 und 2 dargestellten Gebrauchsstellung durch geeignete Anschläge gehalten werden, so daß sie auch unter Belastung nicht nach unten wegklappen können.

## Patentansprüche

1. Für eine Küche vorgesehene Einrichtung mit einer Halterung für eine Kaffeemaschine, wobei die Halterung einen an einer vertikalen Wand montierbaren Befestigungsteil aufweist und derart ausgebildet ist, daß die Kaffeemaschine zwischen einer Nichtgebrauchsstellung und einer Gebrauchsstellung, in der ihr Abstand von der Wand größer als in ihrer Nichtgebrauchsstellung ist, bewegbar ist, **dadurch gekennzeichnet**, daß die Einrichtung (14, 24, 26, 28, 30) eine einen Naßbereich (16, 18, 20) aufweisende und vor der Wand (10) anbringbare Spüle (14) umfaßt, daß die Kaffeemaschine (26) mit der Halterung (48, 50, 56, 58) verbunden ist und letztere zwischen Kaffeemaschine und Befestigungsteil (48) über ein Gelenk (58) mit vertikaler Schwenkachse (36) verfügt, und daß die Halterung und die Kaffeemaschine derart ausgebildet sind, daß sich die Kaffeemaschine in ihrer Gebrauchsstellung über dem Naßbereich (16, 18, 20) der Spüle (14) befindet.

2. Einrichtung nach Anspruch 1, gekennzeichnet durch eine zur Kaffeemaschine (26) führende Frischwasserzufuhrleitung (28) zum Anschließen an eine die Spüle (14) versorgende Wasserleitung.

3. Einrichtung nach Anspruch 1 oder 2, dadurch gekennzeichnet, daß Halterung (24) und Kaffeemaschine (26) derart ausgebildet sind, daß sich die Kaffeemaschine in ihrer Gebrauchsstellung über einem Becken (20) der Spüle (14) befindet.

4. Einrichtung nach einem oder mehreren der vorstehenden Ansprüche, dadurch gekennzeichnet, daß die Halterung (24) eine Arretiervorrichtung (68) zum Arretieren der Kaffeemaschine (26) in ihrer Gebrauchsstellung aufweist, welche derart ausgebildet ist, daß beim Anbringen und Lösen eines um eine vertikale Achse (44) drehbaren Filterteils (40) der Kaffeemaschine (26) die letztere in ihrer Gebrauchsstellung verbleibt.

5. Einrichtung nach einem oder mehreren der vorstehenden Ansprüche, dadurch gekennzeichnet, daß die Halterung (24) ungefähr U-förmig mit einem an der Wand befestigbaren vertikalen Schenkel (48) sowie zwei horizontalen Schenkeln (56) ausgebildet ist, wobei die beiden horizontalen Schenkel mit den Anlenkstellen (58) für die Kaffeemaschine (26) versehen sind.

6. Einrichtung nach einem oder mehreren der vorstehenden Ansprüche, dadurch gekennzeichnet, daß unterhalb der Kaffeemaschine (26) ein Träger (30) zum Aufsetzen wenigstens eines Trinkgefäßes vorgesehen ist.

7. Einrichtung nach Anspruch 6, dadurch gekennzeichnet, daß der Träger (30) eine Aufsetzplatte (90, 92) aufweist.

8. Einrichtung nach Anspruch 6 oder 7, dadurch gekennzeichnet, daß der Träger (30) um eine vertikale Achse (36) schwenkbar ist.

9. Einrichtung nach Anspruch 8, dadurch gekennzeichnet, daß die Schwenkachse (36) des Trägers (30) mit derjenigen der Kaffeemaschine (26) fluchtet.

10. Einrichtung nach Anspruch 8 oder 9, dadurch gekennzeichnet, daß die Schwenkachse (36) des Trägers (30) von einem Stab oder Rohr (28) gebildet und der Träger von einem, am Stab oder Rohr angebrachten horizontalen Ausleger (80) gehalten wird, welcher um die Träger-Schwenkachse (36) schwenkbar ist.

11. Einrichtung nach den Ansprüchen 2, 9 und 10, dadurch gekennzeichnet, daß das den Träger (30) haltende Rohr (28) die Frischwasserzufuhrleitung aufnimmt.

12. Einrichtung nach den Ansprüchen 9 und 10, dadurch gekennzeichnet, daß das den Träger (30) haltende Rohr (28) eine Elektroleitung für die Kaffeemaschine (26) aufnimmt.

13. Einrichtung nach Anspruch 10, dadurch gekennzeichnet, daß der Träger (30) am Ausleger (80) um eine horizontale Achse schwenkbar angebracht und in einer Gebrauchsstellung durch einen Anschlag gehalten ist.

14. Einrichtung nach einem oder mehreren der Ansprüche 6 bis 13, dadurch gekennzeichnet, daß der Träger (30) unterhalb des Befestigungsteils (48) angeordnet ist.
